# EUROPÄISCHE PATENTSCHRIFT

(11) **EP 0 760 588 B1**
(45) Veröffentlichungstag und Bekanntmachung des Hinweises auf die Patenterteilung: **21.02.2007**
(21) Anmeldenummer: 96113608.2
(22) Anmeldetag: 23.08.1996
(51) Int. Cl.: H04Q 11/04, H04M 11/06, H04Q 3/62, H04Q 7/00

(54) **Verfahren und Anordnung zur Herstellung von Fernmeldeverbindungen**
Method and device for establishing telecommunication connections
Méthode et dispositif d'établissement de liaisons de télécommunication

(30) Priorität: 28.08.1995 DE 19531613
(43) Veröffentlichungstag der Anmeldung: 05.03.1997
(73) Patentinhaber: SIEMENS AKTIENGESELLSCHAFT, 80333 München (DE)
(72) Erfinder: Jahn, Alfred, Dipl.-Ing. (FH), 81373 München (DE); Breuer, Wolfgang, Dipl.-Ing., 80799 München (DE); Neuhaus, Ralf, Dipl.-Ing., 44534 Lünen (DE)

(56) Entgegenhaltungen:
- EP-A- 0 226 610
- WO-A-90/12469
- WO-A-94/16531
- DE-A- 4 329 056
- DE-A- 4 330 704

## Beschreibung

Die Erfindung betrifft ein Verfahren und eine Anordnung zur Herstellung von Fernmeldeverbindungen nach dem Oberbegriff des Patentanspruchs 1 bzw. nach dem Patentanspruch 7.

Es sind bereits unterschiedliche Kommunikationssysteme zur Herstellung von Fernmeldeverbindungen von bzw. zu Schnurlostelefonen bekannt. Aus der europäischen Patentschrift 0 226 610 ist bereits ein Kommunikationssystem bekannt, das aus einer Nebenstellenanlage, einer Funkvermittlungsstelle, aus stationären Einheiten (Basisstationen) sowie aus Schnurlostelefonen besteht. Dabei ist die an die Nebenstellenanlage angeschaltete Funkvermittlungsstelle Über Verbindungsleitungen mit mehreren stationären Einheiten verbunden. Die Schnurlostelefone können Fernmeldeverbindungen unabhängig von ihrer örtlichen Zuordnung zu einer dieser Basisstationen aufbauen; dies gilt auch für Verbindungen, die zu den Schnurlostelefonen aufgebaut werden. Ändert ein Schnurlostelefon, das an einer Fernmeldeverbindung beteiligt ist, seinen Ort in der Weise, daß die Empfangs- bzw. Sendequalität über die bisher aktivierte Basisstation nachläßt und daß gleichzeitig die Sende- bzw. Empfangsqualität über eine andere Basisstation verbessert wird, so erfolgt im Rahmen der bestehenden Fernmeldeverbindung eine Umschaltung auf die Basisstation, über die die bessere Qualität der Verbindung realisiert wird ("Handover").

Das bekannte Kommunikationssystem erlaubt jedoch keine Fernmeldeverbindungen, die über den Bereich der Nebenstellenanlage hinaus bzw. über unterschiedliche Funkvermittlungsstellen geführt werden.

Aus dem deutschen Gebrauchsmuster G 93 00 044.8 ist bereits eine Anordnung zur Herstellung von Fernmeldeverbindungen bekannt, an denen mindestens ein mobiles Endgerät beteiligt ist. Die bekannte Anordnung umfaßt mindestens eine Vermittlungsanlage und sogenannte Funkvermittlungseinheiten mit Basisstationen. Jedes Endgerät ist jeweils genau einer Funkvermittlungseinheit als originärer Funkvermittlungseinheit ("Heimatfunkvermittlungseinheit") fest zugeordnet. Diese Zuordnung ergibt sich aus einer endgeräteindividuellen Identifizierungsinformation, die in der jeweiligen Funkvermittlungseinheit und dem jeweiligen Endgerät abgelegt ist und verbindungsvorbereitend und verbindungsbegleitend zwischen den mobilen Endgeräten, den Basisstationen und den Funkvermittlungseinheiten ausgetauscht werden. Bei dieser bekannten Anordnung kann zwar eine übliche Vermittlungsanlage verwendet werden, ohne daß Eingriffe in die vermittlungstechnischen Steuerungsprozeduren vorzunehmen sind; allerdings erweist sich der Aufbau von Fernmeldeverbindungen insoweit als komplex, als Fernmeldeverbindungen unabhängig vom Ort des an der jeweiligen Fernmeldeverbindung beteiligten mobilen Endgeräts über die, diesem Endgerät aufgrund der Identifizierungsinformation zugeordneten Funkvermittlungseinheit hergestellt werden. Weiterhin sind in den Funkvermittlungseinheiten der bekannten Anordnung Daten abzuspeichern, die einerseits die feste Zuordnung von mobilen Endgeräten und Basisstationen und andererseits eine aktuelle örtliche Zuordnung der mobilen Endgeräte zu den Funkvermittlungseinheiten bezeichnen.

Eine weitere solche Anordnung ist z.B. offenbart in Dokument WO 94 16531 A.

Ausgehend von diesem Stand der Technik liegt der Erfindung die Aufgabe zugrunde, ein Verfahren und eine Anordnung der eingangs genannten Art anzugeben, welche die Herstellung von Fernmeldeverbindungen unter Beteiligung mindestens eines mobilen Endgeräts ermöglichen, ohne daß zusätzlich zu der ohnehin erfolgenden Abspeicherung von Verwaltungsdaten in der Vermittlungseinrichtung diese Daten oder weitere Daten außerhalb der Vermittlungseinrichtung abzuspeichern sind.

Die Lösung dieser Aufgabe erfolgt durch ein Verfahren und eine Anordnung, die in den Patentansprüchen definiert sind.

Als wesentlich für die Erfindung ist anzusehen, daß der Wirkungsbereich einer Vermittlungseinrichtung ("erste Vermittlungseinrichtung") erheblich ausgeweitet werden kann. Dieser Vorteil ist insbesondere dann von wesentlicher Bedeutung, wenn der Vermittlungseinrichtung mobile Endgeräte zugeordnet sind. Vorteilhafterweise werden Rufnummern mobiler und stationärer Endgeräte vermittlungstechnisch in der ersten Vermittlungseinrichtung in identischer Weise verwaltet.

Die erfindungsgemäße Herstellung von Fernmeldeverbindungen wird durch die Verwendung des an sich bekannten ISDN-Leistungsmerkmals "Multiple Subscriber Number" vereinfacht.

Die im Rahmen des erfindungsgemäßen Verfahrens mitverwendeten zweiten Vermittlungseinrichtungen führen vermittlungstechnisch einfache Prozeduren aus, die im wesentlichen darin bestehen, bei kommenden Verbindungen zu zugeordneten Endgeräten Belegtzustände dieser Endgeräte zu registrieren. Bei gehenden Verbindungen bestehen die von den zweiten Vermittlungseinrichtungen durchzuführenden Prozeduren im wesentlichen darin, die Signalisierungs- und Nutzinformationen zwischen erster Vermittlungseinrichtung und Endgerät weiterzuleiten.

Die im Rahmen des erfindungsgemäßen Verfahrens vorgesehene Einrichtung MMS, die zwischen der ersten und den zweiten Vermittlungseinrichtungen angeordnet ist, führt ebenfalls nur vermittlungstechnisch einfache Prozeduren aus, die im wesentlichen darin bestehen, bei kommenden Verbindungen aus der Rufnummer des gerufenen Endgeräts Rufnummern zu bilden, die neben einem endgeräteindividuellen Bestandteil zusätzlich einen Bestandteil aufweisen, der jeweils eine zweite Vermittlungseinrichtung bezeichnet.

Sogenannte Registrierungsdateien, wie diese üblicherweise in Home und Visitor Location Registern in Mobilfunksystemen verwendet werden, sind im Rahmen der Erfindung nicht notwendig.

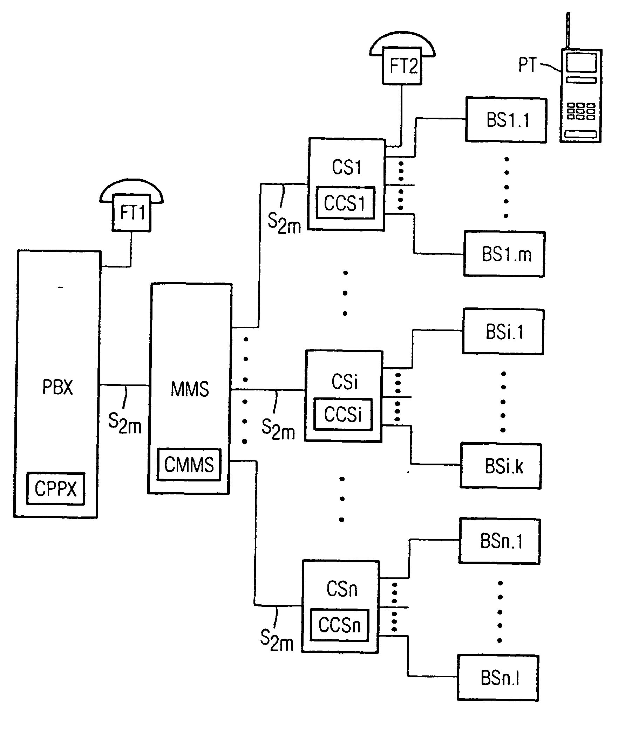

Die Erfindung wird nun anhand der Zeichnung beschrieben, die schematisch eine Anordnung zur Durchführung des erfindungsgemäßen Verfahrens bezeichnet.

Die in der Zeichnung dargestellte Anordnung weist eine erste Vermittlungseinrichtung PBX auf, die beispielsweise aus den Schriften der Firma Siemens "Hicom 300 System, Product Data, Ordering No. A 19100-K3161-G430-X7600, Seiten 55-57 und "ISDN in the Office" Special Issue of telcom report and Siemens Magazine com 1985, Seiten 48-72 bekannt ist. Die erste Vermittlungseinrichtung PBX kann auch eine öffentliche Vermittlungseinrichtung, insbesondere eine digitale bzw. ISDN-Vermittlungseinrichtung sein.

Der ersten Vermittlungseinrichtung PBX ist ein stationäres Endgerät FT1 und eine Einrichtung MMS nachgeschaltet, deren vermittlungstechnische Funktion noch beschrieben wird. Die Einrichtung MMS ist mit einer Mehrzahl zweiter Vermittlungseinrichtungen CS1, CS2, ..., CSn verbunden, deren vermittlungstechnischer Funktion ebenfalls noch beschrieben wird. Als zweite Vermittlungseinrichtungen CS1, CS2, ..., CSn können sogenannte Cordless Server verwendet werden, die beispielsweise jeweils durch die Anlage "Hicom cordless 125" der Firma Siemens (Datenblatt 2/95 A 31002-M20-A2-1-5) gebildet werden können.

Die zweiten Vermittlungseinrichtungen CS1, CS2, ..., CS sind mit ortsfesten Endgeräten FT2 und/oder mit mindestens einer Basisstation BS1.1, gegebenenfalls auch mit einer Mehrzahl von Basisstationen BS1.l,...BS1.m; BSi.1, ... über je eine Verbindungsleitung verbunden.

Die erste Vermittlungseinrichtung PBX, die Einheit MMS und die zweiten Vermittlungseinrichtungen CS1, CSi, ..., CSn weisen jeweils eine Steuerung CPBX, CMMS, CCS1, CCSi, ..., CCSn auf, deren zugeordnete Steuerungsprogramme gemeinsam das erfindungsgemäße Verfahren definieren.

Im Rahmen des erfindungsgemäßen Verfahrens werden bei einem kommenden Ruf zu der Rufnummer (z.B. 1147) des gerufenen Endgeräts (z.B: PT) n-1 Rufnummern gebildet. Die Rufnummer des gerufenen Endgerätes hat einen ersten Bestandteil (z.B. "11"), die diejenige zweite Vermittlungseinrichtung (z.B. CS1) bezeichnet, die dem gerufenen Endgerät fest zugeordnet ist, sowie einen zweiten Bestandteil (z.B. "47"), der das gerufene Endgerät bezeichnet. Die Anzahl n ist zugleich die Anzahl der zweiten Vermittlungseinrichtungen. Diese Rufnummern werden in der Weise gebildet, daß sie einen ersten Bestandteil (z.B. "12", "1n") haben, der jeweils eine andere zweite Vermittlungseinrichtung (z.B. "CS1", "CSn") bezeichnet, die ungleich der zweiten Vermittlungseinrichtung (CS1) ist, die dem gerufenen Endgerät fest zugeordnet ist.

Vorzugsweise bildet die zwischen der ersten und den zweiten Vermittlungseinrichtungen geschaltete Einrichtung MMS diese n-1 Rufnummern, und zwar ausgehend von der Rufnummer des gerufenen Endgeräts, die von der ersten Vermittlungseinrichtung PBX abgegeben wird.

Es werden also n-1 Rufnummern gebildet, wobei jeder der n-1 Rufnummern ("1247", ..., "1n47") aus dem endgeräteindividuellen zweiten Bestandteil ("47") und aus jeweils dem ersten Bestandteil ("12", ..., "1n") bestehen, der jeweils eine andere zweite Vermittlungseinrichtung (CS2, ..., CSn) bezeichnet.

Die Einrichtung MMS steuert alle zweiten Vermittlungseinrichtungen mit den jeweiligen Rufnummern an.

Die erste Vermittlungseinrichtung verwaltet direkt angeschlossene, d.h. ortsfeste Endgeräte (z.B. FT1) und mobile Endgeräte, die zweiten Vermittlungseinrichtungen zugeordnet sind, vermittlungstechnisch in identischer Weise.

In der ersten Vermittlungseinrichtung PBX kann zur Verwaltung der angeschlossenen Endgeräte und zur Bildung der n-1 Rufnummern das an sich bekannte ISDN-Leistungsmerkmal "Multiple Subscriber Number" realisiert sein; vorzugsweise werden die n-1 Rufnummern von der Einrichtung MMS gebildet.

Das Leistungsmerkmal "Multiple Subscriber Number" (MSN) ist Bestandteil des Euro-ISDN und gehört zu den Bearer Services im Euro-ISDN. Mit "Multiple Subscriber Number" wird in Euro-ISDN die Möglichkeit geschaffen, daß bis zu 10 Endgeräte beliebiger Rufnummern hinter einer "Network Termination" am Sₒ-Bus anschließbar sind.

Das erfindungsgemäße Verfahren ist wie bereits beschrieben mit fest angeschlossenen Endgeräten FT1, FT2 und/oder mit mobilen Endgeräten PT durchführbar. Wird ein mobiles Endgerät gerufen, das sich im Zustand der Empfangsbereitschaft befindet, quittiert das Endgerät Belegungsversuche; der Belegtzustand wird in der ersten Vermittlungseinrichtung PBX und in derjenigen zweiten Vermittlungseinrichtung (z.B. CSi) registriert, der das gerufene mobile Endgerät PT gerade örtlich zugeordnet ist.

Nach einer Ausführungsform des erfindungsgemäßen Verfahrens kann vorgesehen sein, daß weniger als n-1 Rufnummern gebildet werden, wobei eine Rufnummer oder mehrere Rufnummern nur für diejenige zweite Vermittlungseinrichtung (z.B: CSi) gebildet wird, der das mobile Endgerät gerade zugeordnet ist, (bzw. zusätzlich auch für diejenigen zweiten Vermittlungseinrichtungen CSi-1, CSi+1, die der zuvor genannten zweiten Vermittlungseinrichtung unmittelbar örtlich benachbart sind). Dies setzt voraus, daß der Einrichtung, die die Rufnummer(n) bildet, d.h. der ersten Vermittlungseinrichtung oder der Einrichtung MMS die momentane Zuordnung von mobilem Endgerät PT und zweiter Vermittlungseinrichtung (z.B. CSi) bekannt ist.

Die erfindungsgemäße Anordnung kann das die für Schnurlostelefonsysteme bekannte Leistungsmerkmal "Roaming" und "Handover" realisieren und zwar sowohl hinsichtlich mobiler Endgeräte im Funkbereich der Basisstationen (z.B. BS1.1, ..., BS1.m) einer zweiten Vermittlungseinrichtung (z.B. CS1) als auch hinsichtlich mobiler Endgeräte im Funkbereich der Basisstationen unterschiedlicher zweiter Vermittlungseinrichtungen (z.B. CS1, CS2).
Das Leistungsmerkmal "Roaming" besteht darin, daß die aktuelle örtliche Zuordnung eines mobilen Endgeräts, das von dem Funkbereich einer ersten Basisstation einer zweiten Vermittlungseinrichtung zu dem Funkbereich einer zweiten Basisstation derselben zweiten Vermittlungseinrichtung oder einer anderen zweiten Vermittlungseinrichtung wechselt, vom System erfaßt wird, wobei in der Zeit, in der die örtliche Zuordnung des Endgeräts PT zu der jeweiligen zweiten Vermittlungseinrichtung bzw. in der ein Wechsel in der örtlichen Zuordnung erfaßt wird, keine Sprach- bzw. Nutzdatenverbindung besteht.

Das Leistungsmerkmal "Handover" besteht darin, daß eine Sprach- bzw. Nutzdatenverbindung unterbrechungsfrei fortgeführt wird, wenn ein mobiles Endgerät während einer Verbindung von dem Funkbereich einer ersten Basisstation einer zweiten Vermittlungseinrichtung zu dem Funkbereich einer zweiten Basisstation derselben Vermittlungseinrichtung ("seamless handover") oder einer anderen zweiten Vermittlungseinrichtung wechselt. Dieser Wechsel zwischen den Funkbereichen erfolgt im Rahmen des erfindungsgemäßen Verfahrens wie folgt:

Das Handover zwischen unterschiedlichen Service Areas, d.h. Wirkungsbereichen zweiter Vermittlungseinrichtungen, wird durch sogenannte Mute-Phasen eingeleitet, die dadurch entstehen, daß eine vorgebbare Bit-Error-Rate (BER), die den Versorgungsbereich für zufriedenstellende Sprachübertragung definiert, überschritten wird, wodurch die Umschaltung der Verbindung von der zuvor aktivierten zweiten Vermittlungseinrichtung CSi zu den unmittelbar benachbarten zweiten Vermittlungseinrichtung CSi-1 oder CSi+1 parallel veranlaßt wird. Dies geschieht selbsttätig durch das System; alternativ hierzu kann diese Umschaltung durch einen in das mobile Endgerät PT eingegebenen Befehl ausgelöst werden.

Es werden nun die vermittlungstechnischen Prozeduren einer Fernmeldeverbindung beschrieben, die beispielsweise von einem ortsfesten internen Endgerät FT1 oder einem externen Endgerät zu einem mobilen Endgerät PT aufgebaut wird, wobei zusätzlich noch von einer Positionsänderung des mobilen Endgeräts zwischen Basisstationen verschiedener zweiter Vermittlungseinrichtungen ausgegangen wird.

Zunächst werden jedoch die Roaming-Prozeduren beschrieben.

Nachdem die zweiten Vermittlungseinrichtungen mit der vom rufenden Endgerät gesendeten Rufnummer und mit den daraus gebildeten Rufnummern angesteuert worden sind, werden die zugehörigen Basisstationen aktiviert. Jede Basisstation sendet einen Paging-Ruf zu den im Funkbereich vorhandenen mobilen Endgeräten bei kommenden Verbindungen aus.

Die Möglichkeit der dedizierten Identifizierung eines mobilen Endgeräts PT ohne anstehenden Ruf - im Sinne einer Verwaltungsregistrierung jedes mobilen Endgeräts PT - ist eine Sonderform des Roaming, die in Verbindung mit dem erfindungsgemäßen Verfahren anwendbar ist, um das Paging auf eine reduzierte Anzahl von Basisstationen zu begrenzen.

Es wird nun davon ausgegangen, daß ein Endgerät FT1 eine Verbindung zu dem mobilen Endgerät PT herstellt, das sich gerade im Funkbereich der Basisstation BS1.1 der zweiten Vermittlungseinrichtung CS1 befindet.

Bei dieser Verbindung stellt zunächst die Steuerung CPBX der ersten Vermittlungseinrichtung PBX aufgrund der von FT1 gewählten Rufnummer "1147" von PT eine erste Verbindung zu der Einrichtung MMS her. Diese bildet maximal n-1 Rufnummern, und zwar "1247", "1347",..."1n47" und steuert mit der vom rufenden Engderät gewählten und dann von der ersten Vermittlungseinrichtung abgegebenen Rufnummer "1147" und mit den gebildeten n-1 Rufnummern "1247", "1347", ..."1n47" die n zweiten Vermittlungseinrichtungen CS1, ..., CSi, ..., CSn an (Broadcast-Senden).

Es kann vorgesehen sein, daß bei Bekanntsein der Lokation des mobilen Endgeräts nur die entsprechende zweite Vermittlungseinrichtung mit der zugehörigen Rufnummer angesteuert wird. Dies kann die Rufnummer sein, die von dem rufenden Endgerät gewählt worden ist und von der ersten Vermittlungseinrichtung abgegeben wird. In diesem Fall wird keine weitere Rufnummer gebildet. Befindet sich das mobile Endgerät nicht gerade im Bereich der zweiten Vermittlungseinrichtung, die der vom rufenden Endgerät gewählten Rufnummer entspricht, so wird bei dieser Ausführungsform des erfindungsgemäßen Verfahrens diejenige Rufnummer derjenigen zweiten Vermittlungseinrichtung gebildet, der das mobile Endgereät zu dem gerade aktuellen Zeitpunkt gerade zugeordnet ist.

Allgemein gilt, daß die zweite Vermittlungseinrichtung CSi erkennt, daß sich das Endgerät PT im Funkbereich einer ihr zugeordneten Basisstation BSi.1, ..., BSi.k befindet. Sie stellt dann die vom rufenden Endgerät FT1 aufgebaute Verbindung zu PT her.

Auch werden alle benachbarten zweiten Vermittlungseinrichtungen CSi-1 und CSi+1 belegt, um eine bestehende Verbindung über CSi, bei welcher das mobile Endgerät seinen Standort wechselt, über CSi-1 oder CSi+1 fortzusetzen. Ist der Wechsel erfolgt, so wird CSi frei und CSi+1 oder CSi-1 wird belegt.

Bei einer solchen Positionsänderung des mobilen Endgeräts während einer bestehenden Verbindung, bildet das mobile Endgerät PT selbsttätig, ausgelöst durch ein Abnehmen der Empfangsqualität (z.B. bei Überschreiten eines Schwellwertes der Bit-Error-Rate BER) ein Signal ICS1CSn, das die Positionsänderung von der zunächst zugeordneten zweiten Vermittlungseinrichtung CSi zu derjenigen zweiten Vermittlungseinrichtung bezeichnet, in deren Funkbereich das Endgerät PT nun überwechselt. An der "Grenze" von CSi zu CSn wird diese Information gebildet, und zwar durch Setzen eines Zeitgliedes und Registrieren des vermittlungstechnischen Zustandes "keine Verbindung" bzw. "ungenügende Verbindung" ohne vorhergehende Signalisierung des vermittlungstechnischen Zustandes "Gesprächsende". In den beiden erstgenannten Zuständen "keine Verbindung" bzw. "ungenügende Verbindung" wird die Verbindung in dem Sinn gehalten, daß eine Wiederaufnahme der Verbindung durch den Nutzer (manuell) oder selbsttätig (durch das System) aktiviert wird. Bei der letztgenannten Alternative, das heißt bei der selbsttätigen Aktivierung kann das Zeitglied eine Prüfung auslösen, ob das Endgerät bereits in einem der möglichen benachbarten Funkbereich der zweiten Vermittlungseinrichtung oder sich aber wieder in dem ursprünglichen Funkbereich aufhält.

Ausgelöst durch dieses Positionsänderungssignal ICS1CSn wird die Verbindung, die zunächst über die zweite Vermittlungseinrichtung CSi und die zugehörige Basisstation BSi.1 geführt wurde, nun über die weitere zweite Vermittlungseinrichtung CSn und z.B. die Basisstation BSn.1 geführt.

Eine gehende Verbindung, die das mobile Endgerät PT zu einem weiteren mobilen Endgerät im Funkbereich einer anderen zweiten Vermittlungseinrichtung oder zu einem ortsfesten internen oder externen Endgerät aufbaut, wird über die dem rufenden Endgerät zugeordnete zweite Vermittlungseinrichtung und die Einrichtung MMS zu der ersten Vermittlungseinrichtung PBX geführt.

Die Einrichtung MMS leitet lediglich die aufzubauende Verbindung weiter, ohne weitere vermittlungstechnische Prozeduren durchzuführen.

Die erste Vermittlungseinrichtung PBX routet die aufzubauende Verbindung zu dem gerufenen Endgerät.

Ist dieses ein Endgerät, das einer zweiten Vermittlungseinrichtung zugeordnet ist, folgen die Prozeduren, die oben im Zusammenhang mit einer kommenden Verbindung beschrieben worden sind. Ist das gerufene Endgerät dagegen kein Endgerät, das einer zweiten Vermittlungseinrichtung zugeordnet ist, folgen die üblichen vermittlungstechnischen Prozeduren.

Der Vorteil der erfindungsgemäßen Prozedur für Handover zwischen zwei unterschiedlichen zweiten Vermittlungseinrichtungen CS1 und CSn liegt darin, daß die Steuerung CPBX der ersten Vermittlungseinrichtung PBX für Handover keine spezifischen Funktionen zu erbringen hat.

Die erfindungsgemäße Zuordnung der Einrichtung MMS und der zweiten Vermittlungseinrichtungen inklusive der Basisstationen zur ersten Vermittlungseinrichtung entspricht einer Vermittlungseinrichtung mit durchgezogenem Sₒ-Bus; das Umleiten einer kommenden Verbindung von einer zweiten Vermittlungseinrichtung mit den angeschlossenen Basisstationen zu einer weiteren zweiten Vermittlungseinrichtung mit den angeschlossenen Basisstationen entspricht dem Umstecken eines Euro-ISDN-Terminals mit dem Leistungsmerkmal "Terminal Portability (TP)" am Sₒ-Bus.

Das Euro-ISDN-Leistungsmerkmal Terminal Portability beinhaltet die Doppelfunktion Umstecken am Bus und Auflösen eines unterbrochenen/geparkten Gespräches an einem anderen gleichwertigen Gerät.

Dabei ist in einem ersten Lösungsansatz die physikalische Entfernung eines Gerätes, wie in der analogen Vermittlungstechnik mit mehreren parallelen Telefonsteckdosen realisiert, am Sₒ-Bus derart implementiert, daß über eine systemimanente (vorgegebene) Zeitdauer das Gespräch in ein Quasi-Halten gelegt wird und eine andere vermittlungstechnische Prozedur, d.h. Signalisierung für Verzweigung in ein anderes Leistungsmerkmal, wie z.B. Rückfrage, verhindert wird. Der einzig zugelassene Auflösezustand für das Leistungsmerkmal Terminal Portability ist die Signalisierung der gewünschten Gesprächsfortsetzung.

Im zweiten Lösungsansatz wird die Funktion des physikalischen Absteckens durch einen Tastendruck oder durch Emulation desselben ausgelöst und an einem zweiten physikalisch vorhandenen Gerät wird die Prozedur des Wiederansteckens ebenfalls durch einen Tastendruck oder einer äquivalten Operation aktiviert. Mit datenprogrammtechnischen Mitteln kann dieser Vorgang emuliert werden.

In der Wirkung sind beide Lösungsansätze "Umstecken" und "Auflösen einer gehaltenen Verbindung" gleichwertig.

Die Einrichtung MMS ist mit der ersten und/oder den zweiten Vermittlungseinrichtungen über jeweils eine Multiplexleitung verbunden, beispielsweise über eine S₂ₘ-Leitung. Es können aber auch n·Sₒ-Leitungen verwendet werden. Die Einrichtung MMS kann räumlich in der ersten Vermittlungseinrichtung PBX oder in einer beliebigen zweiten Vermittlungseinrichtung integriert sein und beispielsweise an deren Stromversorgung angeschlossen sein. Alternativ hierzu kann sie räumlich getrennt von der ersten Vermittlungseinrichtung oder den zweiten Vermittlungseinrichtungen angeordnet sein.

## Patentansprüche

1. Verfahren zur Herstellung von Fernmeldeverbindungen zwischen einem rufenden und einem gerufenen Endgerät (FT1, PT) über eine erste Vermittlungseinrichtung (PBX), wobei an die erste Vermittlungseinrichtung eine Anzahl n zweiter Vermittlungseinrichtungen (CS1, ..., CSn) anschaltbar ist,
**dadurch gekennzeichnet,**
**dass** zur Herstellung dieser Fernmeldeverbindungen bei einem kommenden Ruf zu der Rufnummer des gerufenen Endgeräts (PT) maximal n-1 Rufnummern gebildet werden,
wobei n die Anzahl der zweiten Vermittlungseinrichtungen (CS1, ..., CSn) ist, und
wobei die Rufnummer des gerufenen Endgeräts einen ersten Bestandteil hat, der eine zweite Vermittlungseinrichtung (CS1) bezeichnet, die dem gerufenen Endgerät zugeordnet ist, sowie einen zweiten Bestandteil, der das gerufene Endgerät bezeichnet, und daß diese n-1 gebildeten Rufnummern einen ersten Bestandteil haben, der jeweils eine zweite Vermittlungseinrichtung bezeichnet, die ungleich der zweiten Vermittlungseinrichtung ist, die dem gerufenen Endgerät zugeordnet ist, und den zweiten Bestandteil haben, der das gerufene Endgerät bezeichnet.

2. Verfahren nach Anspruch 1, **dadurch gekennzeichnet, daß** die erste Vermittlungseinrichtung (PBX) direkt angeschlossene Endgeräte (FT1) und an zweite Vermittlungseinrichtungen (CS1, ..., CSn) angeschlossene Endgeräte (PT) vermittlungstechnisch identisch verwaltet.

3. Verfahren nach Anspruch 1 oder 2, **dadurch gekennzeichnet, daß** die erste Vermittlungseinrichtung zur Verwaltung der angeschlossenen Endgeräte das ISDN-Leistungsmerkmal "Multiple Subscriber Number" realisiert.

4. Verfahren nach einem der vorstehenden Ansprüche, **dadurch gekennzeichnet, daß** das gerufene Endgerät (PT) ein mobiles Endgerät ist, das je nach seiner aktuellen örtlichen Position unterschiedlichen zweiten Vermittlungseinrichtungen zugeordnet sein kann und das sich im Zustand der Empfangsbereitschaft befindet, daß dieses Endgerät Belegungsversuche quittiert und daß der Belegtzustand in der ersten Vermittlungseinrichtung (PBX) und in der momentanen örtlich zugeordneten zweiten Vermittlungseinrichtung (CS1) registriert wird.

5. Verfahren nach Anspruch 4, **dadurch gekennzeichnet, daß** bei einer Postionsänderung des mobilen Endgeräts (PT) zwischen der zunächst örtlich zugeordneten zweiten Vermittlungseinrichtung (CS1) und einer weitereren zweiten Vermittlungseinrichtung (z.B. CS3) ein die Positionsänderung bezeichnendes Signal (ICS1CS3) an die weitere zweite Vermittlungseinrichtung (CS3) übertragen wird, und daß ausgelöst durch dieses Signal (ICS1CS3) die Verbindung über die weitere zweite Vermittlungseinrichtung (CS3) geführt wird.

6. Verfahren nach einem der vorstehenden Ansprüche, **dadurch gekennzeichnet, daß** in einer zwischen der ersten Vermittlungseinrichtung (PBX) und den zweiten Vermittlungseinrichtungen (CS1, ..., CSn) geschalteten Einrichtung (MMS) aus der von der ersten Vermittlungseinrichtung (PBX) abgegebenen Rufnummer die n-1 Rufnummern gebildet werden, und daß diese Einrichtung (MMS) alle zweiten Vermittlungseinrichtungen (CS1, ..., CSn) mit den jeweiligen Rufnummer ansteuert.

7. Schaltungsanordnung zur Durchführung des Verfahrens nach einem der vorstehenden Ansprüche, **dadurch gekennzeichnet, dass** die erste und die zweiten Vermittlungseinrichtungen jeweils ein Steuerwerk (CPPX, CCS1, ..., CCSn) aufweisen, und dass den Steuerwerken jeweils ein Steuerungsprogramm zur Durchführung des Verfahrens nach einem der vorstehenden Ansprüche zugeordnet ist, und dass die Steuerwerke die zugeordneten Steuerungsprogramme ausführen.

8. Schaltungsanordnung nach Anspruch 7, **dadurch gekennzeichnet, dass** die zwischen der ersten und den zweiten Vermittlungseinrichtungen geschaltete Einrichtung (MMS) ein Steuerwerk aufweist, dessen zugeordnetes Steuerungsprogramm das Verfahren nach Anspruch 6 gemeinsam mit den den Steuerwerken der Vermittlungsseinrichtungen jeweils zugeordneten Steuerungsprogrammen durchführt, und indem die Steuerwerke der Vermittlungseinrichtungen die zugeordneten Steuerungsprogramme ausführen.

9. Schaltungsanordnung nach Anspruch 7 oder 8, **dadurch gekennzeichnet, daß** die zwischen der ersten und den zweiten Vermittlungseinrichtungen geschaltete Einrichtung (MMS) mit der ersten Vermittlungseinrichtung (PBX) und/oder den zweiten Vermittlungseinrichtungen (CS1, ..., CSn) über jeweils eine Multiplexleitung (S₂ₘ) verbunden ist.

## Claims

1. Method for establishing telecommunication connections between a calling and a called terminal (FT1, PT) by way of a first switching facility (PBX), it being possible to connect a number n of second switching facilities (CS1, ..., CSn) to the first switching facility,
**characterised in that**
to establish these telecommunication connections
in the case of an incoming call to the call number of the called terminal (PT) maximum n-1 call numbers are formed, with n being the number of second switching facilities (CS1, ..., CSn), and
with the call number of the called terminal having a first component, which identifies a second switching facility (CS1), which is assigned to the called terminal, and a second component, which identifies the called terminal, and that these n-1 formed call numbers have a first component, which identifies a second switching facility in each instance, which is different from the second switching facility, which is assigned to the called terminal, and have the second component, which identifies the called terminal.

2. Method according to claim 1, **characterised in that** the first switching facility (PBX) manages directly connected terminals (FT1) and terminals (PT) connected to second switching facilities (CS1, ..., CSn) in an identical manner for switching purposes.

3. Method according to claim 1 or 2, **characterised in that** the first switching facility implements the ISDN performance feature "Multiple Subscriber Number" to manage the connected terminals.

4. Method according to one of the preceding claims, **characterised in that** the called terminal (PT) is a mobile terminal, which can be assigned to different second switching facilities depending on its current local position and which is in a ready-to-receive state, that said terminal acknowledges call attempts and that the busy state is registered in the first switching facility (PBX) and in the currently locally assigned second switching facility (CS1).

5. Method according to claim 4, **characterised in that** when the mobile terminal (PT) changes position between the initially locally assigned second switching facility (CS1) and a further second switching facility (e.g. CS3), a signal (ICS1CS3) identifying the position change is transmitted to the further second switching facility (CS3) and that, triggered by this signal (ICS1CS3) the connection is made by way of the further second switching facility (CS3).

6. Method according to one of the preceding claims, **characterised in that** the n-1 call numbers are formed from the call numbers output by the first switching facility (PBX) in a facility (MMS) connected between the first switching facility (PBX) and the second switching facilities (CS1, ..., CSn) and that this facility (MMS) activates all the second switching facilities (CS1, ..., CSn) using the respective call number.

7. Circuit arrangement for implementing the method according to one of the preceding claims, **characterised in that** the first switching facility and second switching facility each have a control unit (CPPX, CCS1, ..., CCSn) and a control programme is assigned to each of the control units to implement the method according to one of the preceding claims and that the control units execute the assigned control programs.

8. Circuit arrangement according to claim 7, **characterised in that** the facility (MMS) connected between the first switching facility and second switching facilities has a control unit, the assigned control programme of which implements the method according to claim 6 together with the control programmes assigned to each of the control units of the switching facilities and **in that** the control units of the switching facilities execute the assigned control programmes.

9. Circuit arrangement according to claim 7 or 8, **characterised in that** the facility (MMS) connected between the first switching facility and the second switching facilities is connected to the first switching facility (PBX) and/or the second switching facilities (CS1, ..., CSn) by way of a multiplex line (S₂ₘ) in each instance.

## Revendications

1. Procédé pour l'établissement de liaisons de télécommunication entre un terminal appelant et un terminal appelé (FT1, PT) au moyen d'un premier dispositif de commutation (PBX), un nombre n de seconds dispositifs de commutation (CS1, ..., CSn) pouvant être rattaché au premier dispositif de commutation,
**caractérisé en ce que**
pour l'établissement de ces liaisons de commutation, au maximum n-1 numéros d'appel sont formés lors d'un appel arrivant vers le numéro d'appel du terminal (PT) appelé, n étant le nombre des seconds dispositifs de commutation (CS1, ..., CSn), et
le numéro d'appel du terminal appelé ayant un premier composant qui désigne un second dispositif de commutation (CS1), lequel est attribué au terminal appelé, et un second composant, qui désigne le terminal appelé et **en ce que** ces n-1 numéros d'appel appelés formés ont un premier composant qui désigne respectivement un second dispositif de commutation qui est différent du second dispositif de commutation, lequel est attribué au terminal appelé, et ont un second composant qui désigne le terminal appelé.

2. Procédé selon la revendication 1, **caractérisé en ce que** le premier dispositif de commutation (PBX) gère de façon identique au niveau de la commutation des terminaux (FT1) directement raccordés et des terminaux (PT) raccordés à des seconds dispositifs de commutation (CS1, ..., CSn).

3. Procédé selon la revendication 1 ou 2, **caractérisé en ce que** le premier dispositif de commutation réalise la caractéristique de performance ISDN "Multiple Subscriber Number" pour la gestion des terminaux raccordés.

4. Procédé selon l'une quelconque des revendications précédentes, **caractérisé en ce que** le terminal (PT) appelé est un terminal mobile qui peut être attribué selon sa position locale actuelle à différents seconds dispositifs de commutation et qui se trouve dans l'état de disponibilité de réception, **en ce que** ce terminal accuse réception d'essais d'occupation et **en ce que** l'état d'occupation occupé est enregistré dans le premier dispositif de commutation (PBX) et dans le second dispositif de commutation (CS1) momentané et attribué localement.

5. Procédé selon la revendication 4, **caractérisé en ce que**, dans le cas d'un changement de position du terminal (PT) mobile entre le second dispositif de commutation (CS1) attribué d'abord localement et un autre second dispositif de commutation (par exemple CS3), un signal (ICS1CS3) désignant le changement de position est transmis à l'autre second dispositif de commutation (CS3) et **en ce que** la liaison, déclenchée par ce signal (ICS1CS3), est déclenchée par l'autre second dispositif de commutation (CS3).

6. Procédé selon l'une quelconque des revendications précédentes, **caractérisé en ce que** les n-1 numéros d'appel sont formés dans un dispositif (MMS) branché entre le premier dispositif de commutation (PBX) et les seconds dispositifs de commutation (CS1, ..., CSn) à partir du numéro d'appel délivré par le premier dispositif de commutation (PBX) et **en ce que** ce dispositif (MMS) active tous les seconds dispositifs de commutation (CS1, ..., CSn) avec le numéro d'appel respectif.

7. Agencement de circuit pour la mise en oeuvre du procédé selon l'une quelconque des revendications précédentes, **caractérisé en ce que** les premiers et les seconds dispositifs de commutation présentent chacun un organe de commande (CPPX, CCS1, ..., CCSn) et **en ce qu'**à chaque fois un programme de commande pour la mise en oeuvre du procédé est attribué à chacun des organes de commande selon l'une quelconque des revendications précédentes, et **en ce que** les organes de commande exécutent les programmes de commande attribués.

8. Agencement de circuit selon la revendication 7, **caractérisé en ce que** le dispositif (MMS) branché entre le premier et les seconds dispositifs de commutation présente un organe de commande dont le programme de commande attribué met en oeuvre le procédé selon la revendication 6 conjointement avec les programmes de commande respectivement attribués aux organes de commande des dispositifs de commutation et du fait que les organes de commande des dispositifs de commutation exécutent les programmes de commande attribués.

9. Dispositif d'agencement de circuit selon la revendication 7 ou 8, **caractérisé en ce que** le dispositif (MMS) branché entre le premier et les seconds dispositifs de commutation est relié avec le premier dispositif de commutation (PBX) et/ou les seconds dispositifs de commutation (CS1, ..., CSn) au moyen de respectivement une ligne multiplex (S₂ₘ).
